# EUROPEAN PATENT APPLICATION

(11) **EP 4 679 235 A1**
(43) Date of publication of application: **14.01.2026**
(21) Application number: 24769819.4
(22) Date of filing: 06.03.2024
(51) Int. Cl.: G06F 3/03, B60R 16/02, H04N 7/18

(54) **HUMAN-COMPUTER INTERACTION SYSTEM FOR MOTOR VEHICLE, AND MOTOR VEHICLE**

(30) Priority: 10.03.2023 CN 202310235177
(71) Applicant: Valeo Schalter und Sensoren GmbH, 74321 Bietigheim-Bissingen (DE); Valeo Interior Controls (Shenzhen) Co., Ltd, Shenzhen, Guangdong 518128 (CN)
(72) Inventor: QI, Jing, 74321 Bietigheim-Bissingen (DE); LIU, Yuzhang, Shenzhen, Guangdong 518128 (CN); MING, Xingchen, Shenzhen, Guangdong 518128 (CN); HAN, Qingyan, Shenzhen, Guangdong 518128 (CN); REILHAC, Patrice, 74321 Bietigheim-Bissingen (DE); ZHAO, Hui, Shenzhen, Guangdong 518128 (CN)
(74) Representative: Jauregui Urbahn, Kristian
(86) International application number: PCT/CN2024/080316
(87) International publication number: WO 2024/188126

(57) **Abstract**

A human-computer interaction system for a motor vehicle, and a motor vehicle. The system (200) comprises a touch component (110; 210); the system (200) can switch between a first function mode and a second function mode by means of the touch component (110; 210); the first function mode comprises an image acquisition mode, and the second function mode comprises an image sharing mode; in the image acquisition mode, a photographing orientation of a camera mounted on a motor vehicle is controlled by means of a specific touch operation for the touch component (110; 210).

## Description

### Technical Field

The present invention relates to the field of human-machine interaction, in particular to a human-machine interaction system for a motor vehicle, and a motor vehicle.

### Background

As the use of human-machine interaction becomes widespread in the civilian and commercial sectors, safe and reliable system control based on human-machine interaction is playing an ever more important role in the field of motor vehicles. Thus, human-machine interaction, especially human-machine interaction systems for motor vehicles, are facing higher requirements.

At present, in human-machine interaction, a driver is generally able to control a motor vehicle effectively via a human-machine interaction system only when the motor vehicle is travelling at a low speed (e.g. when the motor vehicle is in a parked state); safe and reliable human-machine interaction is not possible when the motor vehicle is travelling normally. Secondly, at present, human-machine interaction generally only pays attention to the local environment close to the motor vehicle, e.g. typically only involves relevant environmental identification and object interaction within a preset distance from the motor vehicle, and it is difficult to realize flexible interaction with targets/objects of interest to the driver within a global environment of the motor vehicle.

Thus, there is a need for a human-machine interaction system that is capable of realizing a human-machine interaction process safely and reliably in a normal state of travel of a motor vehicle while realizing human-machine interaction functionality effectively, and which is able to flexibly interact with objects in a global environment of the motor vehicle according to actual needs; the human-machine interaction system is also highly safe and reliable, convenient to use, and gives a good human-machine interaction experience.

### Summary

To address the above problems, the present invention provides a human-machine interaction system and a motor vehicle. Using the human-machine interaction system provided in the present invention, a safe and reliable human-machine interaction process in a normal state of travel of a motor vehicle can be realized while human-machine interaction functionality is realized effectively. The human-machine interaction system, which can flexibly interact with objects in a global environment of the motor vehicle according to actual needs, is also highly safe and reliable, convenient to use, and gives a good human-machine interaction experience.

According to an aspect of the present disclosure, a human-machine interaction system for a motor vehicle is proposed, comprising: a touch component, the system being able to switch between a first function mode and a second function mode by means of the touch component, wherein the first function mode comprises an image acquisition mode, and the second function mode comprises an image sharing mode, wherein, in the image acquisition mode, a capture orientation of a camera mounted on the motor vehicle is controlled by means of a specific touch operation on the touch component.

In some embodiments, said control of a capture orientation of a camera mounted on the motor vehicle by means of a specific touch operation on the touch component comprises: adjusting a capture orientation of the camera to correspond to a target touch position by performing a specific touch operation at a target touch position on the touch component.

In some embodiments, said control of a capture orientation of a camera mounted on the motor vehicle by means of a specific touch operation on the touch component comprises: selecting, according to the target touch position, a camera on the motor vehicle that corresponds to the target touch position to perform image acquisition.

**In** some embodiments, the touch component comprises: a touch sensing module with an at least partial spherical surface, wherein the system is able to switch between a first function mode and a second function mode by means of the touch sensing module.

**In** some embodiments, the touch sensing module switches from the first function mode to the second function mode on the basis of a first gesture, and switches from the second function mode to the first function mode on the basis of a second gesture.

**In** some embodiments, in the image acquisition mode, the system is able to control a capture orientation of a camera by performing a specific touch operation at a target touch position on the touch sensing module.

In some embodiments, the touch component comprises: a touch-sensing function selection module, wherein the system is able to switch between a first function mode and a second function mode by means of the function selection module.

In some embodiments, the function selection module comprises a switching button, which is able to switch between the first function mode and the second function mode.

In some embodiments, the switching button switches from the first function mode to the second function mode on the basis of a third gesture, and switches from the second function mode to the first function mode on the basis of a fourth gesture.

In some embodiments, the touch sensing module has a first visual mode in the first function mode, and has a second visual mode in the second function mode, the first visual mode being different from the second visual mode.

In some embodiments, the touch sensing module has a first light emission state in the first function mode, and has a second light emission state in the second function mode, wherein the second light emission state is different from the first light emission state.

In some embodiments, the light emission states comprise: at least one of color, transparency, contrast and pattern.

In some embodiments, in the first function mode and the second function mode, the function selection module respectively comprises one or more sub-function selection buttons corresponding to the first function mode and the second function mode.

In some embodiments, in the image acquisition mode, the sub-function selection button comprises a camera selection button.

In some embodiments, the camera selection button selects one or more of a motor vehicle external camera, a motor vehicle internal camera, a front camera, and a driver monitoring system camera.

In some embodiments, in the image sharing mode, the sub-function selection button comprises a social media selection button.

In some embodiments, in the image capture mode, a captured image is displayed to the driver of the motor vehicle at a camera viewing angle corresponding to a selected camera, and/or in the image sharing mode, the captured image is shared at a camera viewing angle corresponding to the selected camera.

In some embodiments, if the selected camera is a front camera, an image is displayed or shared at a first-person viewing angle of the driver of the motor vehicle; and/or if the selected camera is a motor vehicle surround-view camera constructed as a motor vehicle external camera, an image is displayed or shared at a third-person viewing angle of the driver of the motor vehicle.

In some embodiments, if the selected camera is a motor vehicle surround-view camera, the system is able to adjust the viewing angle of the displayed or shared image by performing a specific touch operation on the touch component.

In some embodiments, the touch sensing module also has a display region.

In some embodiments, the display region comprises an OLED display element.

In some embodiments, the touch sensing module is a touch sensing ball.

In some embodiments, the human-machine interaction system is located on a center console between the driver and a front passenger of the motor vehicle.

According to another aspect of the present disclosure, a motor vehicle is proposed, fitted with the human-machine interaction system described above.

### Brief Description of the Drawings

In order to describe the technical solution of embodiments of the present invention more clearly, the drawings required to be used in describing the embodiments will be briefly described below. Obviously, the drawings described below show only some embodiments of the present invention, and for those of ordinary skill in the art, other drawings can be obtained according to these drawings without inventive effort. The drawings below have not been drawn meticulously in proportion according to actual dimensions, but focus on showing the substance of the present invention.
Fig. 1 shows a schematic diagram of a human-machine interaction system 100 for a motor vehicle according to the present disclosure.
Fig. 2 shows a side view of an exemplary human-machine interaction system 200 of a motor vehicle according to embodiments of the present disclosure.
Fig. 3 shows a schematic drawing of an exemplary human-machine interaction system 200 of a motor vehicle according to embodiments of the present disclosure in the image acquisition mode.
Fig. 4 shows a schematic drawing of the human-machine interaction system 200 according to embodiments of the present disclosure in the image sharing mode.

### Detailed Embodiments

The technical solution in embodiments of the present invention will be described clearly and completely below with reference to the drawings. Obviously, the embodiments described are merely some, not all, of the embodiments of the present invention. All other embodiments obtained by those skilled in the art based on embodiments of the present invention without inventive effort shall also fall within the scope of protection of the present invention.

As indicated in the present application and claims, unless expressly specified otherwise in the context, words such as "a", "one", "one type", and/or "said" do not specifically mean the singular, and may also include the plural. Generally, the terms "comprise" and "include" only indicate inclusion of expressly identified steps and elements, but these steps and elements do not constitute an exclusive enumeration; a method or device may also include other steps or elements.

Although the present application makes various references to certain modules in the system according to embodiments of the present application, any number of different modules may be used and run on user terminals and/or servers. The modules are purely illustrative, and different modules may be used in different aspects of the system and the method.

According to one aspect of the present disclosure, a human-machine interaction system for a motor vehicle is proposed. The human-machine interaction system for a motor vehicle is a system used to realize various functions of interaction (including display, control, execution, etc.) between a user (e.g. a driver) and the motor vehicle and a surrounding environment thereof.

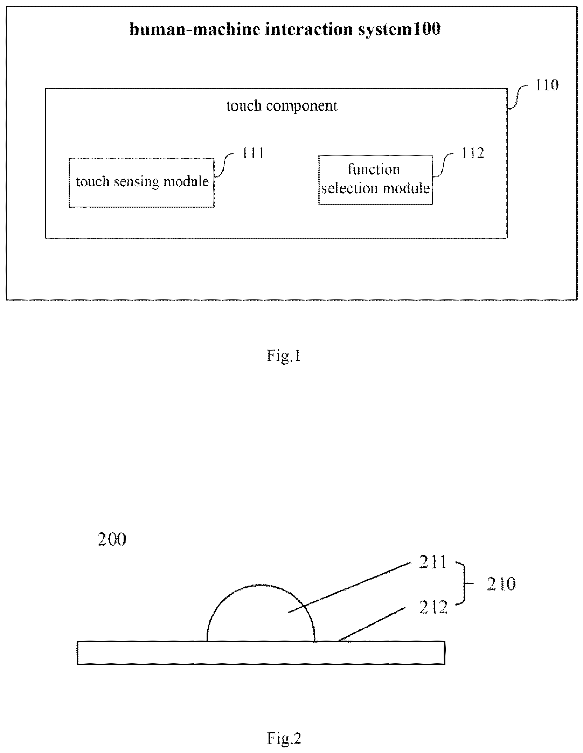

Fig. 1 shows a schematic diagram of a human-machine interaction system 100 for a motor vehicle according to the present disclosure. Referring to Fig. 1, the human-machine interaction system 100 comprises a touch component 110. The touch component is a component which, based on a corresponding touch operation of a user, realizes a corresponding function. It should be understood that embodiments of the present disclosure are not restricted with regard to the content of the specific touch operation of the user or the specific form of the touch component.

For example, the system is able to switch between a first function mode and a second function mode by means of the touch component. It should be understood that the terms "first function mode" and "second function mode" mentioned here are merely intended to distinguish between two different system function modes.

For example, the first function mode comprises an image acquisition mode, and the second function mode comprises an image sharing mode. However, it should be understood that the first and second function modes could also comprise other function modes according to actual needs.

The image acquisition mode is a mode used for acquiring an image of interest to the user. The image may for example be an image of the interior of the motor vehicle, an image of the driver, an image within a local area in front of the motor vehicle when parked, an image of an external surrounding environment of the motor vehicle, etc. Embodiments of the present disclosure are not limited with regard to the specific type of image obtained or the content thereof.

The image sharing mode is a mode used for sharing the image of interest to the user. It should be understood that the image shared here may for example be an image acquired by capture in the "image acquisition mode" by the user in real time, or an image obtained by editing an image acquired by capture in the "image acquisition mode", or an image previously captured and stored by the user. Embodiments of the present disclosure are not restricted with regard to the specific source of the shared image or the content thereof.

In the image acquisition mode, a capture orientation of a camera mounted on the motor vehicle is controlled by means of a specific touch operation on the touch component.

For example, depending on actual needs, the specific touch operation may for example be tapping (e.g. by single tapping or double tapping) a target touch position on the touch component. Moreover, when the user performs a specific touch operation, a capture mode of the camera may for example be adjusted to correspond to a target touch position, thereby controlling the capture orientation of the camera on the motor vehicle. However, embodiments of the present disclosure are not limited to this.

Based on the above, as a result of configuring the system to be switchable between two different function modes (e.g. the image acquisition mode and the image sharing mode) by means of the touch component, the image acquisition mode and the image sharing mode can be switched and selected by touch operations (e.g. different gestures) while the user is travelling normally. In particular, when the user is in a normal state of travel, the configuration in the present application allows modes to be selected by merely performing a specific touch operation by hand (e.g. pressing a switching button) without the need for the user to look away from the direction of travel. Thus, human-machine interaction is realized safely and reliably in a normal state of travel of the motor vehicle, thus increasing the safety of human-machine interaction. **In** addition, such a configuration also enables the user to acquire pictures in real time according to actual needs during travel, thereby enriching the human-machine interaction experience. Furthermore, a capture orientation of the camera mounted on the motor vehicle is controlled via a specific touch operation of the touch component in the image acquisition mode, such that a human-machine interaction process is realized safely and reliably in a normal state of travel of the motor vehicle via the touch component, and flexible interaction with objects in a global environment of the motor vehicle according to actual needs is possible by adjusting the camera.

**In** some embodiments, said control of a capture orientation of a camera mounted on the motor vehicle by means of a specific touch operation on the touch component comprises: adjusting a capture orientation of the camera to correspond to a target touch position by performing a specific touch operation at a target touch position on the touch component.

As stated above, the specific touch operation may for example be tapping (e.g. by single tapping or double tapping) a target touch position on the touch component.

For example, at this time, different touch positions on the touch component correspond to different camera capture orientations. When the user performs a specific touch operation at a particular touch position, the system can obtain a capture orientation associated with that touch position, and use the capture orientation as a target orientation for acquiring an image.

Based on the above, by performing a specific touch operation at a target touch position on the touch component, a capture orientation of the camera is adjusted to correspond to a target touch position, enabling precise and flexible adjustment of a camera capture orientation in a simple and convenient operation.

In some embodiments, said control of a capture orientation of a camera mounted on the motor vehicle by means of a specific touch operation on the touch component comprises: selecting, by performing a specific touch operation at a target touch position on the touch component, a camera on the motor vehicle that corresponds to the target touch position to perform image acquisition.

For example, at this time, different touch positions on the touch component correspond to different cameras. When the user performs a specific touch operation at a particular touch position, the system can obtain a camera associated with that touch position, and use the camera as a target camera to perform image acquisition.

For example, depending on actual needs, if the user performs a specific touch operation at a target touch position on the touch component (e.g. single-taps a particular position on the touch component), at this time the system may for example acquire, based on the target touch position selected by the user, a camera (target camera) corresponding to the target touch position and a capture orientation (target capture orientation) corresponding to the target position, and use the target camera to perform image acquisition at the target orientation.

Based on the above, as a result of the configuration whereby a camera on the motor vehicle that corresponds to the target touch position is selected to perform image acquisition by performing a specific touch operation on a target touch position on the touch component, a corresponding camera can be selected in a simple and convenient interactive manner, thereby realizing a human-machine interaction process safely and reliably in a normal state of travel of the motor vehicle.

In some embodiments, referring to Fig. 1, the touch component 110 comprises: a touch sensing module 111 with an at least partial spherical surface. The touch sensing module 111 is a module capable of sensing a specific touch operation of the user and performing a corresponding function.

The touch sensing module 111 with an at least partial spherical surface may for example be configured as a sphere or a hemisphere; embodiments of the present disclosure are not restricted with regard to the specific proportion of the spherical surface part of the touch sensing module or the specific form of the partial spherical surface thereof.

Moreover, the system may for example switch between a first function mode and a second function mode by means of the touch sensing module 111.

As a result of the configuration whereby switching between the first function mode and the second function mode is performed by means of the touch sensing module with an at least partial spherical surface, the user can interact with the system via the at least partial spherical surface in the process of switching, to obtain a better interactive experience.

In some embodiments, the touch sensing module 111 switches from the first function mode to the second function mode on the basis of a first gesture, and the touch sensing module 111 switches from the second function mode to the first function mode on the basis of a second gesture.

It should be understood that the terms "first gesture" and "second gesture" mentioned here are merely intended to distinguish between different function mode switching processes, and not intended to limit them. For example, the first gesture may be the same as the second gesture, or may be different from the second gesture.

It should be understood that the gesture may for example include, but is not limited to, single-tapping, double-tapping, a touch operation for a predetermined time, etc. Embodiments of the present disclosure are not restricted with regard to the specific gesture attitude.

As a result of the configuration whereby the touch sensing module switches from the first function mode to the second function mode on the basis of a first gesture, and switches from the second function mode to the first function mode on the basis of a second gesture, switching of function modes can be realized simply and conveniently by means of a gesture operation of the user.

In some embodiments, in the image acquisition mode, the system can control a capture orientation of a camera by performing a specific touch operation at a target touch position on the touch sensing module 111.

For example, when the user performs a specific touch operation at a target touch position on the touch sensing module 111, the system for example adjusts a capture orientation of the camera to correspond to the target touch position. Alternatively, when the user performs a specific touch operation at a target touch position on the touch sensing module 111, the system selects a camera on the motor vehicle that corresponds to the target touch position to perform image acquisition.

Based on the above, as a result of the configuration whereby, in the image acquisition mode, the system can control a capture orientation of a camera by performing a specific touch operation at a target touch position on the touch sensing module 111, adjustment and selection of camera capture orientation can be realized in a simple and convenient manner, while the touch sensing module with an at least partial spherical surface realizes a good human-machine interaction experience.

In some embodiments, the touch component comprises: a touch-sensing function selection module 112. The system is able to switch between a first function mode and a second function mode by means of the function selection module.

The touch-sensing function selection module 112 may for example, in response to a specific touch operation of the user, perform a corresponding function selection. For example, a navigation function may be selected on the basis of a first specific touch operation of the user, and a capture function may be selected on the basis of a second specific operation of the user. However, it should be understood that embodiments of the present disclosure are not limited with regard to the specific function selected by the touch-sensing function selection module.

As a result of the configuration whereby the system is able to switch between a first function mode and a second function mode by means of the function selection module, a process of switching between different functions can be realized simply and conveniently.

In some embodiments, the touch component 110 may for example comprise both a touch sensing module 111 with an at least partial spherical surface, and a touch-sensing function selection module 112.

For example, the touch sensing module 111 with an at least partial spherical surface and the touch-sensing function selection module 112 for example both enable the system to switch between a first function mode and a second function mode.

For example, at this time, a function performed by the touch sensing module is for example different from the function selection module, and the touch sensing module 111 is for example configured as a module that is able to sense a specific touch operation of the user and perform a corresponding function. For example, once a specific function has been selected on the basis of the function selection module, the purpose of the touch sensing module is to realize a secondary function of the specific function on the basis of a touch operation of the user.

The touch sensing characteristic may for example be realized on the basis of the structure of the function selection module and/ the touch sensing module itself; for example, a touch sensing surface, for user contact, of the function selection module and/ the touch sensing module may be provided with one or more flexible touch sensor, or may realize touch sensing in another way. It should be understood that embodiments of the present disclosure are not limited with regard to the specific manner of implementation of the touch sensing.

The touch sensing module 111 with an at least partial spherical surface may for example be formed integrally with the touch-sensing function selection module 112, being formed by means of the same flexible touch sensor layer for example. Alternatively, the touch sensing module 111 with an at least partial spherical surface and the touch-sensing function selection module 112 may be formed as two separate components. Embodiments of the present disclosure are not limited with regard to the specific manner in which the touch sensing module 111 with an at least partial spherical surface and the function selection module 112 are formed.

Moreover, the human-machine interaction system 100 is able to switch between a first function mode and a second function mode by means of the function selection module 112.

It should be understood that the terms "first function mode" and "second function mode" mentioned here are merely intended to distinguish between two different function modes, and not intended to limit them. Embodiments of the present disclosure are not limited with regard to the specific content of the first and second function modes.

For example, the function selection module may comprise a switching button, which switches from the first function mode to the second function mode on the basis of a first gesture, and switches from the second function mode to the first function mode on the basis of a second gesture, thereby realizing switching between the first function mode and the second function mode.

Based on the above, in the present application, as a result of configuring the human-machine interaction system for a motor vehicle to comprise a touch component, and having the touch component that comprises a touch sensing module with an at least partial spherical surface and a touch-sensing function selection module, and switching between a first function mode and a second function mode by means of the function selection module, firstly, providing the touch component having the touch-sensing function selection module and the touch sensing module makes it possible to realize associated control of human-machine interaction directly by means of a corresponding touch operation, with no need for the user to direct his line of sight to a corresponding function interface to perform a selection. Compared with an existing human-machine interaction system, the system in the present application is able to realize a human-machine interaction process more safely and reliably through configuration of the touch component, such that an effective human-machine interaction process can be realized by means of the human-machine interaction system in the present application on the basis of a touch operation of the user, in both a normal state of travel and a state of low-speed travel (e.g. when parked) of the motor vehicle. Secondly, the touch-based manner of human-machine interaction also increases the flexibility of human-machine interaction, and the configuration whereby the touch sensing module has an at least partial spherical surface further improves the flexibility and convenience of use of the touch component, and can give a customer a better human-machine interaction experience.

In some embodiments, the function selection module 112 comprises a switching button, which is able to switch between the first function mode and the second function mode.

The switching button is a button used to realize switching of the first function mode and the second function mode. For example, the switching button may for example switch to a corresponding one of the first function mode and the second function mode on the basis of different touch gestures.

It should be understood that the switching button may for example be a button structural component arranged on the function selection module, or may be a specific touch region for realizing switching on a touch surface of the function selection module, wherein the touch surface comes into contact with the user. Embodiments of the present disclosure are not restricted with regard to the specific form and structure of the switching button.

Based on the above, in the present application, as a result of the configuration whereby the function selection module comprises a switching button, and the switching button is able to switch between the first function mode and the second function mode, switching and selection of different function modes can be realized simply and conveniently by means of the switching button on the function selection module, helping to further clarify the division of tasks among components in the human-machine interaction system, and increasing the convenience and reliability of human-machine interaction in the human-machine interaction system.

**In** some embodiments, the switching button switches from the first function mode to the second function mode on the basis of a third gesture, and switches from the second function mode to the first function mode on the basis of a fourth gesture.

It should be understood that the third gesture and the fourth gesture are intended to represent gestures respectively used to realize two different switching processes of switching from the first function mode to the second function mode, and switching from the second function mode to the first function mode, without any intention to limit the third and fourth gestures.

For example, in some embodiments, the third gesture and the fourth gesture may for example be the same gesture, e.g. may both be single-tapping of the switching button. However, in some embodiments, the third gesture and the fourth gesture may be different gestures; for example, the third gesture is single-tapping of the switching button, and the fourth gesture is long pressing the switching button for longer than a predetermined time.

It should be understood that the third gesture and the fourth gesture may for example be gestures that are preset by the system, or may be gestures that are set on the basis of actual needs and preferences of the user. Embodiments of the present disclosure are not restricted with regard to the way in which the third gesture and the fourth gesture are generated.

Based on the above, in the present application, as a result of the configuration whereby the switching button switches from the first function mode to the second function mode on the basis of a third gesture, and switches from the second function mode to the first function mode on the basis of a fourth gesture, firstly, based on the actual needs and actual circumstances of the user, corresponding switching gestures can be set for the different switching processes of the switching button of the human-machine interaction system, thus helping to improve the user's experience of human-machine interaction more effectively. Secondly, the use of the third gesture and the fourth gesture to realize switching between the first and second function modes enables simple and convenient selection of function modes of the human-machine interaction system, and such a gesture-based manner of switching helps the user to realize a human-machine interaction process safely and reliably, thus increasing the safety and reliability of the human-machine interaction system, and enhancing the convenience of human-machine interaction.

**In** some embodiments, the touch sensing module **111** has a first visual mode in the first function mode, and has a second visual mode in the second function mode, the first visual mode being different from the second visual mode.

The visual modes are operating modes that the touch sensing module has in a visual (i.e. observable to the human eye) sense; specifically, the visual modes may for example include one or more of a light emission state, a shape state, and a structural composition state. Embodiments of the present disclosure are not restricted with regard to the specific composition of the visual modes.

It should be understood that the first visual mode and the second visual mode may for example be visual modes that are preset by the human-machine interaction system, or may be visual modes selected by the user according to actual needs. Embodiments of the present disclosure are not restricted with regard to the specific way in which the first and second visual modes are generated, or the specific composition thereof.

For example, in some embodiments, the touch sensing module is for example a hemisphere in the first function mode, and a sphere in the second function mode. Alternatively, it may have a first light emission state in the first function mode, and a second light emission state different from the first light emission state in the second function mode.

Based on the above, in the present application, as a result of the configuration whereby the touch sensing module has a first visual mode in the first function mode, and has a second visual mode different from the first visual mode in the second function mode, once the first and second function modes have been switched by means of the switching button, the user is able to ascertain, in a visually direct way, the function mode which the system is currently in, on the basis of the different visual states of the touch sensing module; this prevents the user from selecting an undesired function mode due to erroneous operation (e.g. erroneous touching), and is conducive to reliable human-machine interaction. Moreover, setting different visual modes for different function modes also further enhances the entertainment value of the human-machine interaction process, improving the user's experience of human-machine interaction.

**In** some embodiments, the visual modes comprise light emission states, and the touch sensing module has a first light emission state in the first function mode, and has a second light emission state in the second function mode, wherein the second light emission state is different from the first light emission state.

It should be understood that the light emission states may for example comprise one or more of emitted light color, transparency, contrast and pattern, or may comprise other light emission characteristics. Embodiments of the present disclosure are not restricted with regard to the specific composition of the light emission states.

It should be understood that the first light emission state and the second light emission state may for example be light emission states that are preset by the human-machine interaction system, or may be light emission states selected by the user according to actual needs. Embodiments of the present disclosure are not restricted with regard to the specific way in which the first light emission state and the second light emission state are generated, or the specific composition thereof.

For example, the touch sensing module is a semi-transparent blue hemisphere in the first function mode, with a wavy texture shone onto the hemisphere, and the touch sensing module is a fully transparent pink hemisphere in the second function mode, with a particulate texture shone onto the hemisphere. However, it should be understood that embodiments of the present disclosure are not limited to this.

Based on the above, in the present application, as a result of the configuration whereby the touch sensing module has a first light emission state in the first function mode and a second light emission state different from the first light emission state in the second function mode, the function mode that the human-machine interaction system is currently in can be displayed simply and conveniently on the basis of the current light emission state of the touch sensing means; moreover, compared with other visual characteristics such as shape or structural composition characteristics, light emission states are more easily noticed by the eye of the user without any need for the user to be excessively distracted (e.g. can be observed by the user's peripheral vision), and are thus more conducive to a safe and efficient human-machine interaction process.

**In** some embodiments, the light emission states comprise: at least one of color, transparency, contrast and pattern.

The color is an emitted light color state of the touch sensing module, e.g. red, green, blue, etc.

The transparency is an emitted light transparency state of the touch sensing module, e.g. fully transparent, semi-transparent, opaque, etc.

The contrast is an emitted light contrast state of the touch sensing module, e.g. high contrast, low contrast, etc.

The pattern is an emitted light pattern state of the touch sensing module, and may for example be observed by means of a surface pattern of the touch sensing module; the emitted light pattern states for example comprise a wavy texture, particulate texture, prismatic texture, rectangular texture, circular texture, etc.

**In** the present application, as a result of the configuration whereby the light emission states of the touch sensing module comprise at least one of color, transparency, contrast and pattern, different function modes can be distinguished by light emission characteristics that are easily identifiable by the user, so the current function mode can be displayed to the user in a more convenient and direct way.

**In** some embodiments, in the first function mode and the second function mode, the function selection module respectively comprises one or more sub-function selection buttons corresponding to the first function mode and the second function mode.

The sub-function selection button is a button used to select a specific sub-function in a corresponding function mode (e.g. the first function mode or the second function mode). For example, when the function mode is the image acquisition mode, the sub-function selection button for example comprises selection buttons for a motor vehicle external camera, a motor vehicle internal camera, a front camera, and a driver monitoring system camera. When the function mode is a navigation mode, the sub-function selection button may for example comprise voice navigation, image navigation, combined image/voice navigation, etc.

It should be understood that the sub-function selection button may for example be one or more button structural component arranged on the function selection module, or may be a specific touch sub-region for realizing switching on a touch surface of the function selection module, wherein the touch surface comes into contact with the user. Embodiments of the present disclosure are not restricted with regard to the specific form and structure of the sub-function selection button.

It should be understood that the sub-function selection button may for example be multiple sub-function selection buttons, and the multiple sub-function selection buttons may for example be arranged around the touch sensing module, e.g. arranged circumferentially around an outer edge of the touch sensing module. However, it should be understood that embodiments of the present disclosure are not limited with regard to the specific number of the sub-function selection modules and the positions in which they are arranged.

It should be understood that the number of sub-function selection buttons in the first function mode may for example be the same as the number of sub-function selection buttons in the second function mode; for example, in both the first and second function modes, the number of sub-function selection buttons is 3, 4 or 6. However, it should be understood that in some embodiments, the number of sub-function selection buttons in the first function mode may for example be different from the number of sub-function selection buttons in the second function mode; for example, there are 4 sub-function selection buttons in the first function mode, and 6 sub-function selection buttons in the second function mode. It should be understood that embodiments of the present disclosure are not limited with regard to the specific number relationship of the sub-function selection buttons in the first and second function modes.

It should be understood that the sub-function selection buttons in the first function mode and the sub-function selection buttons in the second function mode may for example be arranged at the same positions, and for example have the same layout or a different layout.

Based on the above, in the present application, as a result of the configuration whereby, in the first function mode and the second function mode, the function selection module respectively comprises one or more sub-function selection buttons corresponding to the first function mode and the second function mode, the user is able, after realizing switching of different modes and performing mode selection by means of the switching button, to further select different sub-functions in this function mode by means of the sub-function selection buttons, thus helping to enrich the performance of the human-machine interaction system, and such a hierarchical arrangement of functions also helps the customer to find target functions conveniently and efficiently, thus increasing the efficiency of human-machine interaction.

**In** some embodiments, in the image acquisition mode, the sub-function selection button comprises a camera selection button.

The camera selection button is a button used to select a specific camera for acquiring an image. The camera selection button may for example be a single button, and when this button is pressed, multiple preset cameras are selected in turn; for example, the following are sequentially selected: a motor vehicle external camera - a motor vehicle internal camera - a front camera - a driver monitoring system camera. Alternatively, the camera selection button may be multiple camera selection buttons, for example further comprising a selection button for a motor vehicle external camera, a selection button for a motor vehicle internal camera, a selection button for a front camera, and a selection button for a driver monitoring system camera.

It should be understood that embodiments of the present disclosure are not limited with regard to the specific number of the camera selection buttons or the composition thereof.

It should be understood that the camera selection button may for example be a separate button structural component arranged on the function selection module, or may be a specific touch sub-region for realizing camera selection on a touch surface of the function selection module, wherein the touch surface comes into contact with the user. Embodiments of the present disclosure are not restricted with regard to the specific form and structure of the camera selection button.

Based on the above, in the present application, as a result of the configuration whereby the sub-function selection button comprises a camera selection button in the image acquisition mode, the user is able, in the image acquisition mode, to further select a specific camera for acquiring an image by means of the camera selection button; this makes it easier for the user to flexibly select different cameras to acquire images on the basis of actual needs, which is conducive to a good human-machine interaction experience.

**In** some embodiments, the camera selection button selects one or more of a motor vehicle external camera, a motor vehicle internal camera, a front camera, and a driver monitoring system camera.

For example, the motor vehicle external camera may for example be an external 360-degree camera (i.e. a motor vehicle surround-view camera), and the motor vehicle internal camera may for example be an internal 360-degree camera. However, it should be understood that embodiments of the present disclosure are not limited with regard to the specific type of camera.

Based on the above, in the present application, the camera selection button is used to select one or more of a motor vehicle external camera, a motor vehicle internal camera, a front camera, and a driver monitoring system camera, such that in image acquisition, cameras of different types, at different positions and with different capture angles can be flexibly selected for image acquisition according to user needs, so as to effectively achieves the capture of images of interest to the user. **In** addition, compared with image acquisition solely by means of an external camera of a motor vehicle in an existing human-machine interaction system, which results in the drawbacks of having too little variation in viewing angles of acquired images and failing to properly satisfy user needs, in the present application, interactive processes with multiple viewing angles or varying viewing angles are realized through the flexible calling and switching of cameras of multiple types, such as a motor vehicle external camera, a motor vehicle internal camera, a front camera, and a driver monitoring system camera, thus increasing the flexibility of human-machine interaction.

**In** some embodiments, in the image sharing mode, the sub-function selection button comprises a social media selection button.

The social media selection button is a button used for selecting a specific social media platform on which an image is to be shared.

For example, the social media selection button selects one or more of commonly used social media platforms. However, it should be understood that embodiments of the present disclosure are not limited with regard to the specific social media platform selected by the social media selection button.

The social media selection button may for example be a single button, and when this button is pressed, multiple preset social media platforms are selected in turn; for example, the following are sequentially selected: social media platform 1 - social media platform 2 - social media platform 3 - social media platform 4. Alternatively, the social media selection button may be multiple social media selection buttons, for example comprising a Tik Tok selection button, a Facebook selection button, a Wechat selection button and an Instagram selection button; when the corresponding button is pressed, the corresponding social media platform is selected.

It should be understood that embodiments of the present disclosure are not limited with regard to the specific number of the social media selection buttons or the composition thereof.

It should be understood that the social media selection button may for example be a separate button structural component arranged on the function selection module, or may be a specific touch sub-region for realizing social media selection on a touch surface of the function selection module, wherein the touch surface comes into contact with the user. Embodiments of the present disclosure are not restricted with regard to the specific form and structure of the social media selection button.

Based on the above, in the present application, in the image sharing mode, the sub-function selection button comprises a social media selection button, so that when sharing a picture, the user is able to further select, by means of the social media selection button, a specific social media platform on which the image is to be shared, which is conducive to a good human-machine interaction experience.

**In** some embodiments, in the image capture mode, a captured image is displayed to the driver of the motor vehicle at a camera viewing angle corresponding to a selected camera, and/or in the image sharing mode, the captured image is shared at a camera viewing angle corresponding to the selected camera.

The camera viewing angle corresponding to a selected camera is a camera viewing angle corresponding to this specific camera; for example, in the case of a front camera, the camera viewing angle corresponding thereto is for example a first-person viewing angle of the driver; in the case of a motor vehicle surround-view camera, the camera viewing angle corresponding thereto is for example a third-person viewing angle.

It should be understood that embodiments of the present disclosure are not limited with regard to the specific viewing angle corresponding to the camera. Different cameras may for example correspond to the same camera viewing angle, or different camera viewing angles.

For example, the camera viewing angle corresponding to the camera may for example be set by the system according to the type of camera, or may be manually selected or set by the user in advance.

Based on the above, in the present application, as a result of the configuration whereby a captured image is displayed to the driver of the motor vehicle at a camera viewing angle corresponding to a selected camera in the image capture mode, and the captured image is shared at the camera viewing angle corresponding to the selected camera in the image sharing mode, so that once a camera has been selected, the display and sharing can both be performed in the camera viewing angle corresponding to this camera in both the camera capture and sharing processes, for example, the viewing angle corresponding to the camerais controlled or selected flexibly according to actual needs and different camera types, so as to realize effective capture of target objects and flexible switching of viewing angles.

In some embodiments, if the selected camera is a front camera, an image is displayed or shared at a first-person viewing angle of the driver of the motor vehicle; and/or if the selected camera is a motor vehicle surround-view camera constructed as a motor vehicle external camera, an image is displayed or shared at a third-person viewing angle of the driver of the motor vehicle.

The first-person viewing angle refers to viewing at the viewing angle of the motor vehicle driver himself; what is seen at this viewing angle is what is seen by the driver himself. The third-person viewing angle is a global viewing angle similar to "God's viewing angle", i.e. viewing at the viewing angle of a third person outside the present scenario; compared with the limited viewing angle range of the first-person viewing angle, the third-person viewing angle is able to reflect objective content within a scenario more comprehensively and completely.

In the present application, as a result of the configuration whereby an image is displayed or shared at a first-person viewing angle of the driver of the motor vehicle if the selected camera is a front camera, and/or an image is displayed or shared at a third-person viewing angle of the driver of the motor vehicle if the selected camera is a motor vehicle surround-view camera constructed as a motor vehicle external camera, corresponding viewing angles are set for different cameras on the basis of the camera type and functionality thereof. Thus, when a front camera is used, the use of the first-person viewing angle for display enables the driver to have a better human-machine interaction experience - the experience of viewing the landscape around the vehicle from his own viewing angle. If a surround-view camera of the motor vehicle is used, as a result of the configuration whereby a third-person viewing angle is used for display, the limitations associated with a first-person viewing angle can be overcome to acquire objective content within the present scenario to the maximum extent, making it easier for the user to realize global planning on the basis of images at the third-person viewing angle, and make corresponding decisions.

In some embodiments, if the selected camera is a motor vehicle surround-view camera, the system is able to adjust the viewing angle of the displayed or shared image by performing a specific touch operation on the touch component.

For example, the specific touch operation may be a single-tapping or double-tapping operation, or may be continuously touching/pressing a specific region for longer than a preset time, or may be other operation content. It should be understood that embodiments of the present disclosure are not limited with regard to the specific operation content of the specific touch operation.

For example, the specific touch operation may for example be a touch operation that is preset by the system, or the specific touch operation may be a touch operation that is selected and set by the user according to actual needs. Embodiments of the present disclosure are not restricted with regard to the specific way in which the specific touch operation is set.

The process of controlling a capture orientation of a camera on the basis of a specific touch operation on the touch component (e.g. the touch sensing module 111) can for example be described in more specific terms. For example, a user-interactive touch surface of the touch sensing module is for example associated with a capture position of the camera, i.e. each touch position in the touch sensing module corresponds to a corresponding capture position of the camera. When the user performs a specific touch operation at a particular touch position (which at this time is a target touch position) on the touch sensing module 111, a currently selected camera captures an image of a target capture position corresponding to the target touch position.

Specifically, for example, in the image acquisition mode, in the case where a motor vehicle external camera (which in this case is a motor vehicle surround-view camera for example) is selected by means of the camera selection button, and the specific touch operation is a single-tapping operation, when the user wishes to acquire an image in the course of normal travel, a target touch position on the touch sensing module 111 that corresponds to a target capture position of the motor vehicle surround-view camera can be single-tapped for example, so as to acquire an image of the target capture position of interest (for example, the motor vehicle surround-view camera will capture an image with the target capture position at the focus).

Based on the above, in the present application, a capture orientation of a camera is controlled by means of a specific touch operation at the touch sensing module, so that the user can select an image capture orientation without needing to shift his line of sight while driving; this will significantly increase the safety and convenience of human-machine interaction, and makes it easier to realize a process of flexible and precise acquisition of an image of interest in a safe and reliable manner in the course of normal travel. In addition, such a configuration is especially advantageous when the selected camera is a motor vehicle surround-view camera; specifically, since the touch sensing module with an at least partial spherical surface is able to correspond to a capture position of the motor vehicle surround-view camera effectively in this case, the user is able, by performing a specific touch operation on a target touch position on the touch sensing module, to precisely control the corresponding motor vehicle surround-view camera to capture an image at a target capture position.

In some embodiments, in the image acquisition mode, a video may for example also be acquired. In this case, after controlling a capture orientation of a camera by means of a specific touch operation at the touch sensing module 111, the beginning and end of video capture may for example be further controlled by means of further specific touch operations at the touch sensing module 111.

For example, in this case, the user may first single-tap a target touch position on the touch sensing module 111 that corresponds to a target capture position of an external 360-degree camera, so as to control an orientation of the camera; next, the user may for example control the beginning of video capture by long pressing a central region of the touch sensing module 111 (e.g. for longer than 3 seconds), and after a period of capture, the user may for example end video capture by long pressing the central region of the touch sensing module 111 again.

It should be understood that embodiments of the present disclosure are not restricted with regard to the specific operations by which the user controls the beginning and end of video capture.

Based on the above, in the present application, as a result of the configuration whereby video capture can be further realized by means of the touch sensing module according to the user's actual needs in the image acquisition mode, the user is able to flexibly create various types of content while driving, which helps to improve the human-machine interaction experience.

In some embodiments, in the image sharing mode, content to be shared is selected by means of the touch sensing module.

It should be understood that a process of selecting content to be shared by means of the touch sensing module may for example be based on a specific touch operation of the user on the touch sensing module, or may be based on different gesture operations of the user on the touch sensing module. Embodiments of the present disclosure are not limited with regard to the specific way in which content to be shared is selected by the user by means of the touch sensing module.

For example, different images may be selected by touching different regions of the touch sensing module. For example, when a central region of the touch sensing module is touched, this means that a currently captured image is selected as content to be shared; when an upper region of the touch sensing module is touched, this means that the picture preceding the currently captured image is selected as content to be shared.

For example, if an at least partial spherical surface of the touch sensing module is rotatable, different images may also be selected by rotating the at least partial spherical surface in different directions. For example, if the touch sensing module has a rotatable sphere configuration, for example, the previous image can be viewed when the sphere is rotated to the left, the next image can be viewed when the sphere is rotated to the right, the current image can be selected as content to be shared when the sphere is rotated to the front, and the current image can be deleted when the sphere is rotated to the back.

It should be understood that in this case, images may be displayed via any display device capable of outputting images in the motor vehicle, and the present disclosure imposes no limitations on the type of display device here. Specifically, for example, images may be displayed inside the touch sensing module, or images may be displayed on an on-board display screen of the motor vehicle, or images may be projected onto the windshield, for viewing by the user.

Based on the above, in the present application, as a result of the configuration whereby content to be shared is selected by means of the touch sensing module in the image sharing mode, content to be shared can be flexibly selected by the user via the touch sensing module, by means of corresponding touch operations or gesture operations, helping to improve the human-machine interaction experience.

In some embodiments, the touch sensing module also has a display region.

The display region is for example configured to display images and/or data according to user needs. It should be understood that embodiments of the present disclosure are not limited with regard to the specific content displayed in the display region.

The display region may for example be a rectangular display region, or may be a circular display region; the display region may be internally provided in an at least partial spherical surface of the touch sensing module, or may be provided in a level surface outside the at least partial spherical surface. It should be understood that embodiments of the present disclosure are not restricted with regard to the shape of the display region or the position where it is provided.

For example, the currently captured image may be displayed via the display region in the image acquisition mode, or user-selected content to be shared may be displayed via the display region in the image sharing mode.

Based on the above, in the present application, as a result of the configuration whereby the touch sensing module has a display region, corresponding images and/ data can be displayed on the touch sensing module according to actual needs, helping to assist the user in human-machine interaction more effectively.

In some embodiments, the display region comprises an OLED display element. The OLED display element is an organic light-emitting diode (OLED) display element.

For example, the display region may comprise a display array formed by multiple OLED display elements, or may comprise only a single OLED display element. Embodiments of the present disclosure are not limited with regard to the number and arrangement of the OLED display elements.

By having the display region of the touch sensing module comprise an OLED display element, the display brightness and plasticity of the display region can be increased significantly. A better display effect is thus achieved, enhancing the user's experience of human-machine interaction.

In some embodiments, the touch sensing module is a touch sensing ball.

As a result of the configuration whereby the touch sensing module is a touch sensing ball, convenience and flexibility during human-machine interaction can be enhanced; in particular, when a capture orientation of the camera is controlled by means of the touch sensing module as described above, the precision and reliability of this control can be increased by using a touch sensing ball. In addition, designing the touch sensing module as a touch sensing ball is also ergonomic, resulting in a more comfortable experience when it is gripped or touched by hand, thus improving the human-machine interaction experience.

In some embodiments, the human-machine interaction system is located on a center console between the driver and a front passenger of the motor vehicle.

Based on the above, as a result of the configuration whereby the human-machine interaction system is located on the center console, the user is able to interact with the human-machine interaction system in a simple and convenient way (e.g. by extending his left/right hand) while driving, without needing to rotate or adjust his sitting posture or position within the motor vehicle; this helps to enhance the convenience of the human-machine interaction system, and improve the user experience.

The human-machine interaction system described above will now be described in more detail in conjunction with specific application scenarios. Fig. 2 shows a side view of an exemplary human-machine interaction system 200 of a motor vehicle according to embodiments of the present disclosure.

Referring to Fig. 2, the human-machine interaction system 200 is for example provided inside the motor vehicle, and the human-machine interaction system 200 is located on a center console between the driver and front passenger of the motor vehicle.

The human-machine interaction system 200 is for example capable of realizing social media information creation and sharing functions, and has two operating modes: an image acquisition mode and an image sharing mode. The specific meanings of the associated operating modes are as described above.

The human-machine interaction system for example comprises a touch component 210, which more specifically comprises a hemispherical touch sensing module 211 (also called a touch sensing ball hereinbelow) and a function selection module 212. The function selection module is for example formed as a flat plate, with the touch sensing ball arranged in a central region of the flat-plate function selection module, and the function selection module is touch-sensing.

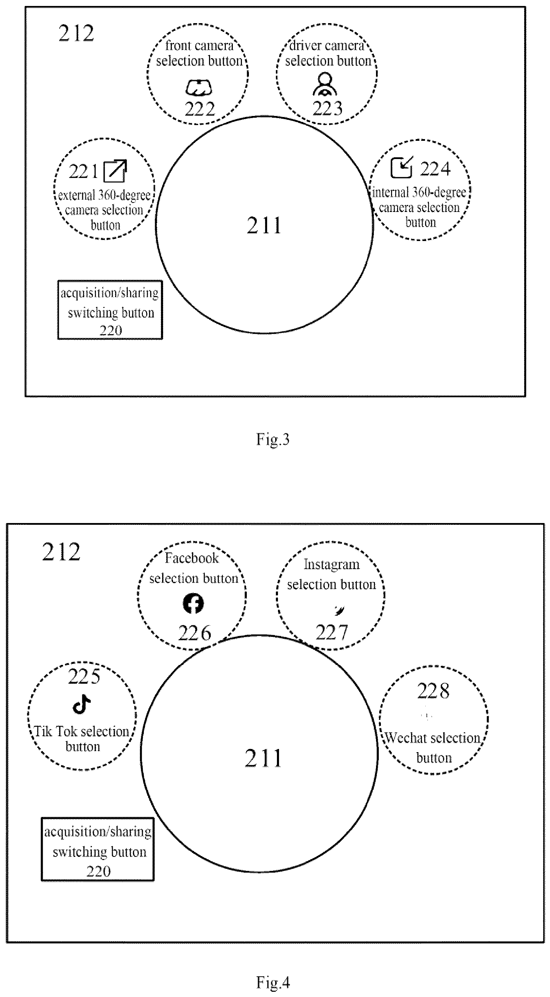

Moreover, the function selection module 212 further comprises an acquisition/sharing switching button 220 (abbreviated as switching button 220 hereinbelow); here, the switching button 220 is for example a specific contact region (e.g. the contact region indicated by the rectangular solid-line box in Fig. 3) of a user-interactive contact surface of the function selection module. Moreover, the switching button 220 is for example arranged immediately adjacent to the touch sensing ball 211, e.g. at a lower left corner of the touch sensing ball 211. The switching button may for example switch from the first function mode to the second function mode on the basis of a first gesture, and switch from the second function mode to the first function mode on the basis of a second gesture. Specifically, for example, when the user single-taps the switching button 211, the human-machine interaction system switches from the image acquisition mode to the image sharing mode; for example, when the user double-taps the switching button, the human-machine interaction system switches from the image acquisition mode to the image sharing mode.

In addition, a light-emitting element is provided for example inside the touch sensing ball 211, and for example, when the human-machine interaction system is in the image acquisition mode, the light-emitting element inside the touch sensing ball 211 emits blue light (i.e. the first visual mode mentioned above); when the human-machine interaction system is in the image sharing mode, the light-emitting element inside the touch sensing ball 211 emits pink light (i.e. the second visual mode mentioned above).

Fig. 3 shows a schematic drawing of the human-machine interaction system 200 according to embodiments of the present disclosure in the image acquisition mode.

Referring to Fig. 3, when the human-machine interaction system is switched to the image acquisition mode by means of the switching button, the function selection module 212 for example comprises multiple sub-function selection buttons 221, 222, 223, 224 corresponding to the image acquisition mode; the sub-function selection buttons are for example camera selection buttons, the meaning and associated content of which are as described above and not repeated here.

It should be understood that, as shown in Fig. 3, the multiple sub-function selection buttons are for example arranged immediately adjacent to the touch sensing ball 211, e.g. at the periphery of the touch sensing ball 211. Moreover, here, the sub-function selection buttons 221, 222, 223, 224 are for example specific contact regions (e.g. the contact regions indicated by the circular dotted-line boxes in Fig. 3) of the user-interactive contact surface of the function selection module.

Moreover, sub-function selection button 221 is an external 360-degree camera (i.e. a motor vehicle surround-view camera) selection button, sub-function selection button 222 is a front camera selection button, sub-function selection button 223 is a driver monitoring system camera selection button, and sub-function selection button 224 is an internal 360-degree camera selection button. At this time, by single-tapping a sub-function selection button, the user can select the corresponding camera.

After selecting a camera, the user can for example control a capture orientation of the camera by means of a specific touch operation on the touch sensing ball 211.

For example, in the image acquisition mode, in the case where a motor vehicle external camera (which in this case is the external 360-degree camera for example) is selected by means of the camera selection button, and the specific touch operation is a double-tapping operation, when the user wishes to acquire an image in the course of normal travel, a target touch position on the touch sensing ball 211 that corresponds to a target capture position of the external 360-degree camera can be double-tapped for example, so as to acquire an image of the target capture position of interest.

After acquiring the image, after the motor vehicle arrives at a target position or stops at the roadside, the user can for example double-tap the switching button, so that the human-machine interaction system switches from the image acquisition mode to the image sharing mode. Fig. 4 shows a schematic drawing of the human-machine interaction system 200 according to embodiments of the present disclosure in the image sharing mode.

Referring to Fig. 4, when in the image sharing mode, the function selection module 212 for example comprises multiple sub-function selection buttons 225, 226, 227, 228 corresponding to the image sharing mode; the sub-function selection buttons are for example social media selection buttons, the meaning and associated content of which are as described above and not repeated here.

It should be understood that, as shown in Fig. 4, the multiple sub-function selection buttons are for example arranged immediately adjacent to the touch sensing ball 211, e.g. at the periphery of the touch sensing ball 211. Moreover, here, the sub-function selection buttons 225, 226, 227, 228 are for example specific contact regions (e.g. the contact regions indicated by the circular dotted-line boxes in Fig. 4) of the user-interactive contact surface of the function selection module.

Moreover, sub-function selection button 225 is for example a Tik Tok selection button, sub-function selection button 226 is for example a Facebook selection button, sub-function selection button 227 is for example an Instagram selection button, and sub-function selection button 228 is for example a Wechat selection button. At this time, by single-tapping a sub-function selection button, the user can select the corresponding social media platform to share a picture.

Moreover, the user can for example further select an image to be shared by means of a specific touch operation on the touch sensing ball 211. For example, the touch sensing ball 211 is for example in a rotatable state in this mode, and the user can for example select different images by rotating the touch sensing ball 211 in different directions. For example, the user views the previous image upon rotating the touch sensing ball 211 to the left, views the next image upon rotating the touch sensing ball 211 to the right, selects the current image as content to be shared upon rotating the touch sensing ball 211 to the front, and deletes the current image upon rotating the touch sensing ball 211 to the back.

On this basis, the user can flexibly select image content to be shared, and share this image content on a target social media platform selected by a sub-function selection button.

The touch sensing ball 211 for example also has a display region, which comprises an OLED display element, for displaying a picture selected by the user on the touch sensing ball, for the user to view.

For example, the user can also subject the image to further processing according to actual needs, e.g. subject the image to further editing, e.g. add voice or text content to the image, add or delete image content, or splice multiple pictures to form a new picture or video file, and share the finally generated content on social media.

According to another aspect of the present disclosure, a motor vehicle is also proposed, fitted with the human-machine interaction system described above and able to perform the abovementioned functions, and having the abovementioned effects.

In the present application, specific words are used to describe embodiments of the present application. For example, "first/second embodiment", "an embodiment", and/or "some embodiments" refer to a feature, structure, or characteristic related to at least one embodiment of the present application. Therefore, it should be emphasized and noted that "an embodiment" or "one embodiment" or "an alternative embodiment" mentioned twice or more in different places herein does not necessarily refer to the same embodiment. In addition, certain features, structures or characteristics in one or more embodiments of the present application may be combined appropriately.

Unless otherwise defined, all of the terms (including technical and scientific terms) used herein have the same meanings as commonly understood by those skilled in the art. It should also be understood that terms such as those defined in a common dictionary should be interpreted as having the same meanings as they have in the context of the related art, rather than being interpreted in an idealized or extremely formalized sense, unless expressly so defined herein.

A description of the present invention is given above, and should not be considered as a limitation thereof. Although certain exemplary embodiments of the present invention have been described, those skilled in the art will readily understand that many modifications may be made to the exemplary embodiments without departing from the novel teaching and advantages of the present invention. Therefore, all such modifications are intended to be included within the scope of the present invention as defined by the claims. It should be understood that the above is a description of the present invention, and should not be deemed to be limited to the specific embodiments disclosed; in addition, modifications made to the disclosed embodiments and other embodiments are intended to be included within the scope of the attached claims. The present invention is defined by the claims and their equivalents.

## Claims

1. A human-machine interaction system for a motor vehicle, comprising:
a touch component, the system being able to switch between a first function mode and a second function mode by means of the touch component,
wherein the first function mode comprises an image acquisition mode, and the second function mode comprises an image sharing mode,
wherein, in the image acquisition mode, a capture orientation of a camera mounted on the motor vehicle is controlled by means of a specific touch operation on the touch component.

2. The system as claimed in claim 1, wherein
the control of a capture orientation of a camera mounted on the motor vehicle by means of a specific touch operation on the touch component comprises:
adjusting a capture orientation of the camera to correspond to a target touch position by performing a specific touch operation at a target touch position on the touch component.

3. The system as claimed in claim 1, wherein
the control of a capture orientation of a camera mounted on the motor vehicle by means of a specific touch operation on the touch component comprises: selecting, by performing a specific touch operation at a target touch position on the touch component, a camera on the motor vehicle that corresponds to the target touch position to perform image acquisition.

4. The system as claimed in claim 1, wherein
the touch component comprises: a touch sensing module with an at least partial spherical surface,
wherein the system is able to switch between a first function mode and a second function mode by means of the touch sensing module.

5. The system as claimed in claim 4, wherein
the touch sensing module switches from the first function mode to the second function mode on the basis of a first gesture, and switches from the second function mode to the first function mode on the basis of a second gesture.

6. The system as claimed in claim 4, wherein, in the image acquisition mode, the system is able to control a capture orientation of a camera by performing a specific touch operation at a target touch position on the touch sensing module.

7. The system as claimed in claim 1, wherein
the touch component comprises: a touch-sensing function selection module,
wherein the system is able to switch between a first function mode and a second function mode by means of the function selection module.

8. The system as claimed in claim 7, wherein the function selection module comprises a switching button, which is able to switch between the first function mode and the second function mode.

9. The system as claimed in claim 8, wherein the switching button switches from the first function mode to the second function mode on the basis of a third gesture, and switches from the second function mode to the first function mode on the basis of a fourth gesture.

10. The system as claimed in claim 4, wherein the touch sensing module has a first visual mode in the first function mode, and has a second visual mode in the second function mode, the first visual mode being different from the second visual mode.

11. The system as claimed in claim 10, wherein the touch sensing module has a first light emission state in the first function mode, and has a second light emission state in the second function mode, and wherein the second light emission state is different from the first light emission state.

12. The system as claimed in claim **11,** wherein the light emission states comprise: at least one of color, transparency, contrast and pattern.

13. The system as claimed in claim 7, wherein, in the first function mode and the second function mode, the function selection module respectively comprises one or more sub-function selection buttons corresponding to the first function mode and the second function mode.

14. The system as claimed in claim 13, wherein, in the image acquisition mode, the sub-function selection button comprises a camera selection button.

15. The system as claimed in claim 14, wherein the camera selection button selects one or more of a motor vehicle external camera, a motor vehicle internal camera, a front camera, and a driver monitoring system camera.

16. The system as claimed in claim 13, wherein, in the image sharing mode, the sub-function selection button comprises a social media selection button.

17. The system as claimed in claim 3 or 15, wherein
in the image capture mode, a captured image is displayed to a driver of the motor vehicle at a camera viewing angle corresponding to a selected camera, and/or
in the image sharing mode, a captured image is shared at a camera viewing angle corresponding to a selected camera.

18. The system as claimed in claim 17, wherein
if the selected camera is a front camera, an image is displayed or shared at a first-person viewing angle of the driver of the motor vehicle; and/or
if the selected camera is a motor vehicle surround-view camera constructed as a motor vehicle external camera, an image is displayed or shared at a third-person viewing angle of the driver of the motor vehicle.

19. The system as claimed in claim 18, wherein, if the selected camera is a motor vehicle surround-view camera, the system is able to adjust the viewing angle of the displayed or shared image by performing a specific touch operation on the touch component.

20. The system as claimed in claim 4, wherein the touch sensing module also has a display region.

21. The system as claimed in claim 20, wherein the display region comprises an OLED display element.

22. The system as claimed in claim 4, wherein the touch sensing module is a touch sensing ball.

23. The system as claimed in claim **1,** wherein the human-machine interaction system is located on a center console between a driver and a front passenger of the motor vehicle.

24. A motor vehicle, fitted with the human-machine interaction system as claimed in claims 1 - 23.
